# EUROPEAN PATENT APPLICATION

(11) **EP 3 750 400 A1**
(43) Date of publication of application: **16.12.2020**
(21) Application number: 19188670.4
(22) Date of filing: 26.07.2019
(51) Int. Cl.: A01K 89/01

(54) **RECIPROCATING MECHANISM OF FISHING REEL AND SPINNING REEL USING RECIPROCATING MECHANISM**

(30) Priority: 10.06.2019 CN 201910497112
(71) Applicant: Chen, Ziyu, Cixi Zhejiang 315300 (CN)
(72) Inventor: Chen, Ziyu, Cixi Zhejiang 315300 (CN); Chen,Yonggang, Cixi Zhejiang 315300 (CN)
(74) Representative: Patentanwälte Gierlich & Pischitzis Partnerschaft mbB

(57) **Abstract**

A reciprocating mechanism of a fishing reel and a spinning reel using the reciprocating mechanism are provided. The spinning reel comprises a housing, a crank, a rotor, a line cup and a reciprocating mechanism of a fishing reel. The reciprocating mechanism of a fishing reel comprises: a main shaft, wherein the rear end of the main shaft is movably inserted into a fishing reel, the front end of the main shaft is connected with a line cup on the fishing reel, and the main shaft is provided with a reciprocating thread; a worm gear disc arranged in the fishing reel and being in transmission connection with a crank on the fishing reel; a worm sleeved on the main shaft, engaged with the worm gear disc and provided with a slot; and a sliding pawl having a connecting ratch adapted with the reciprocating thread, wherein the connecting ratch penetrates through the slot and is engaged with the reciprocating thread. The structure of the present invention is very simple and more reasonable, is convenient in connection, and smooth and stable in use, replaces the existing complicated reciprocating mechanism with multiple components, greatly reduces requirements for component precision and assembly precision, is more convenient in maintenance and replacement, and makes the price of product lower and more competitive in the market.

## Description

### TECHNICAL FIELD

The present invention relates to the technical field of fishing reels, and particularly to a reciprocating mechanism of a fishing reel and a spinning reel using the reciprocating mechanism.

### BACKGROUND

Fishing is an outdoor sport, with the purpose to use a fishing gear to catch fishes from water. Moreover, fishing does not limit gender and age, and is popular with adults and children. Fishing is in touch with nature and cultivates sentiment, and is very popular with enthusiasts.

Basically, the fishing reels are classified into two major categories: drum reels in which a line arrangement direction is parallel to the direction of incoming and outgoing of lines, and spinning reels in which the line arrangement direction is perpendicular to the direction of incoming and outgoing of lines. The fishing reel is assembled on a fishing rod, and then the state of the reel is observed. The drum reel means that, when a bus is extended/retracted, the reel must be rotated directly to wind or release the bus, and at the same time, the bus is not turned at a large angle when it is arranged into the reel, but is arranged into the reel in a nearly parallel direction. Conversely, the spinning reel means that when the bus comes in and out, the reel does not need to rotate (but will rotate with the bus when coming out in some cases), and the action of twining the bus is completed by a twining arm and the bus must firstly turn at nearly 90 degrees when the bus enters the reel.

The spinning reel is widely used in sea fishing and lure fishing, as well as fishing in lakes and ponds. It has the characteristic of simple operation, and a skilled person can use it completely by hand feeling instead of eyes. It has small throwing resistance, can throw a lighter fishing tackle combination, and is not easy to mess. The spinning reel needs a line cup to continuously move back and forth during use, so as to throw a fishing line to the distance.

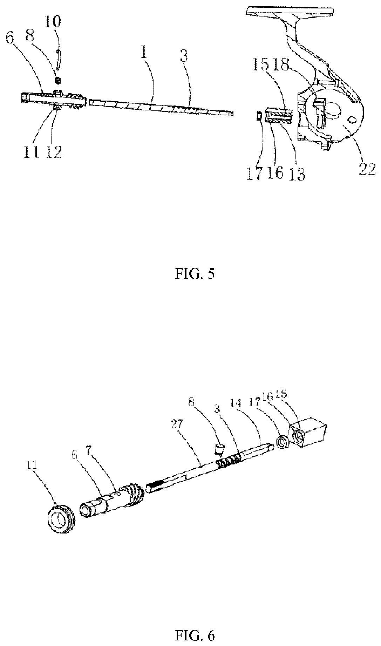

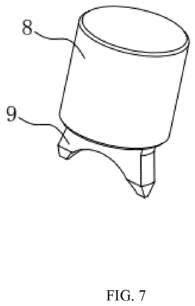

The existing spinning reel for fishing has a general structure that comprises a main body and a crank arranged on one side of the main body. A transverse crank rotating shaft and a vertical reciprocating lever perpendicular to the crank rotating shaft are arranged in the main body. The crank is connected with the crank rotating shaft to drive the crank rotating shaft to rotate by rotating the crank. The crank rotating shaft is provided with a driving gear, and the driving gear is engaged with a driven gear which is arranged in the main body. The driven gear is provided with an eccentric column. The lower end of the reciprocating lever is provided with a sliding block. The sliding block is provided with a transverse chute. The eccentric column is positioned in the chute. The crank rotating shaft is also provided with a worm gear. A worm is sleeved on the reciprocating lever. The worm gear is engaged with the worm. A rewinding guide disc is sleeved outside the worm and the rewinding guide disc is fixedly connected with the worm. The upper part of the reciprocating lever is also sleeved with a spool positioned above the rewinding guide disc. The spool is connected with the reciprocating lever to move back and forth along with the reciprocating lever. The crank is rotated to rotate the crank rotating shaft. The crank rotating shaft rotates to rotate the driving gear, so that the driven gear engaged with the driving gear also rotates. The eccentric column on the driven gear slides in the chute, so as to drive the sliding block to operate back and forth upwards and downwards. Then, the reciprocating lever pivoted with the sliding block operates back and forth upwards and downwards. The spool movably connected to the reciprocating lever can move back and forth upwards and downwards. At the same time, the crank rotating shaft rotates, and then the worm gear drives the worm to rotate, namely, the reciprocating lever rotates and the rewinding guide disc fixedly connected with the reciprocating lever can rotate as the worm rotates. For example, a patent for invention with application number of CN201210548513.7 discloses a spinning reel for fishing with a reciprocating mechanism. It can be clearly seen by observing Figs. 5-8 that, the reciprocating motion of the reciprocating lever is realized by the eccentric column and an S-shaped chute.

In addition, a structure that realizes the reciprocating motion through two axes also appears in the market. For example, a patent for invention with application number of CN201711143569.3 discloses a reciprocating motion mechanism of a spinning reel and a spinning reel with the mechanism. The reciprocating motion mechanism of the invention is a mechanism that enables a spool axis with a spool to move back and forth in the axial direction of the spool axis relative to a reel body through the rotation of a handle, and has a rotating component, a sliding block, a first guide shaft and an elastic component. The rotating component has a clamping part, and rotates as the handle rotates. The sliding block is connected to the spool axis, has a clamped part clamped with the clamping part of the rotating component, and moves back and forth in the axial direction together with the spool axis in conjunction with the rotation of the rotating component. Both ends of the first guide shaft have a first supporting part and a second supporting part, and a middle part between the first supporting part and the second supporting part supports the sliding block and guides the sliding block to move back and forth. The elastic component is installed on the periphery of at least one of the first supporting part and the second supporting part, and the first guide shaft is supported on the reel body.

In short, the integral structures of the above two reciprocating mechanisms of the spinning reel are complicated, comprise more components which are mostly non-standard workpieces, are complicated in connection, and have extremely high requirements for product precision of the components and assembly precision; otherwise, it is easy to lag during use. Once damage is caused, it is troublesome in maintenance and replacement, which also leads to high price of the existing fishing reel and causes a heavy economic burden on fishing enthusiasts.

### SUMMARY

To overcome the above defects in the prior art, the present invention provides a reciprocating mechanism of a fishing reel and a spinning reel using the reciprocating mechanism.

The present invention adopts the following technical solution to solve the technical problems: a reciprocating mechanism of a fishing reel comprises:
a main shaft, wherein the rear end of the main shaft is movably inserted into a fishing reel, the front end of the main shaft is connected with a line cup on the fishing reel, and the main shaft is provided with a reciprocating thread;
a worm gear disc arranged in the fishing reel and being in transmission connection with a crank on the fishing reel;
a worm sleeved on the main shaft, engaged with the worm gear disc and provided with a slot; and
a sliding pawl having a connecting ratch adapted with the reciprocating thread, wherein the connecting ratch penetrates through the slot and is engaged with the reciprocating thread.

Preferably, the reciprocating mechanism of a spinning reel further comprises a seal ring; the worm is sleeved with a fastening sheath; the fastening sheath is provided with a groove; the position of the groove corresponds to the position of the slot; and the seal ring is clamped into the groove and is used to press the sliding pawl inserted into the slot.

Preferably, the reciprocating mechanism of a spinning reel further comprises a movable limiting block which is fixed into the fishing reel; the rear end of the main shaft has a flat section; the movable limiting block is provided with a limiting hole adapted with the flat section; and the flat section is inserted into the limiting hole and can move forwards and backwards along the limiting hole.

Preferably, the front end of the movable limiting block is provided with a clamping groove; a first bushing is arranged in the clamping groove; and the first bushing is sleeved on the main shaft;
the front part of the main shaft is also sleeved with a bearing fixing seat; the bearing fixing seat is provided with a second bushing and a rotor bearing; and the rotor bearing is abutted against a rotor of the fishing reel.

Preferably, the reciprocating mechanism of a spinning reel further comprises a holding block; the holding block is positioned at the front side of the movable limiting block; the holding block is provided with a through hole; the main shaft penetrates through the through hole and then is inserted into the limiting hole of the movable limiting block; a first worm bearing and a third bushing are also arranged in the through hole; the third bushing is sleeved on the main shaft; the first worm bearing is sleeved on the worm; and the front part of the worm is also sleeved with a second worm bearing.

A spinning reel comprises a housing, a crank connected to one side of the housing and being in transmission connection with a worm gear disc, a rotor positioned at the front end of the housing and fixedly connected with a worm, a line cup positioned in the rotor and fixedly connected with a main shaft, and a brake mechanism for stopping the outgoing of lines, and further comprises the above reciprocating mechanism of the fishing reel.

The present invention has the following beneficial effects: the reciprocating mechanism of the fishing reel is formed by the matching among the main shaft, the worm gear disc, the worm and the sliding pawl; the structure is very simple and more reasonable, is convenient in connection, and smooth and stable in use, replaces the existing complicated reciprocating mechanism with multiple components, greatly reduces requirements for component precision and assembly precision, is more convenient in maintenance and replacement, greatly reduces product weight and structural space, enables the entire product to be lighter, also enhances product reliability and durability, and makes the price of product lower and more competitive in the market.

### DESCRIPTION OF DRAWINGS

- Fig. 1: is an exploded view of the present invention.
- Fig. 2: is a local sectional view of the present invention.
- Fig. 3: is an amplified schematic diagram of part A in Fig. 2.
- Fig. 4: is an amplified schematic diagram of part B in Fig. 2.
- Fig. 5: is a local exploded view of the present invention.
- Fig. 6: is an exploded view of a reciprocating mechanism of a fishing reel.
- Fig. 7: is a structural schematic diagram of a sliding pawl.

### DETAILED DESCRIPTION

The present invention will be further described below in detail in combination with the drawings and specific embodiments.

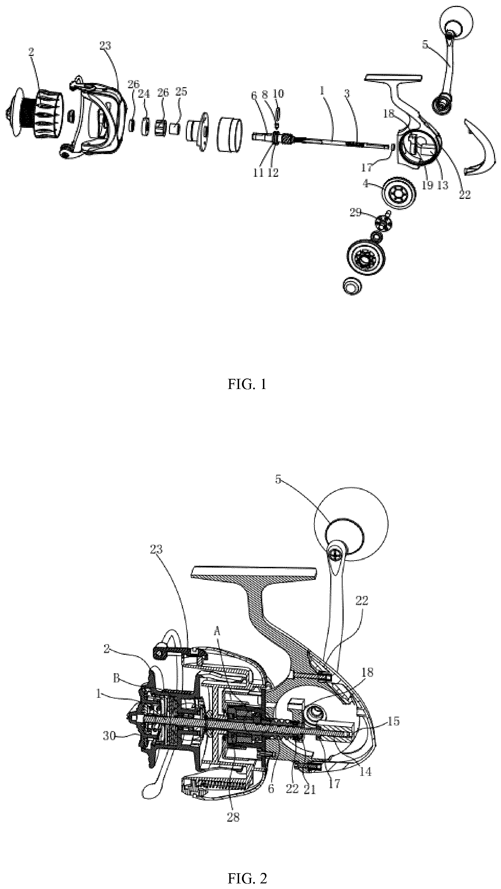

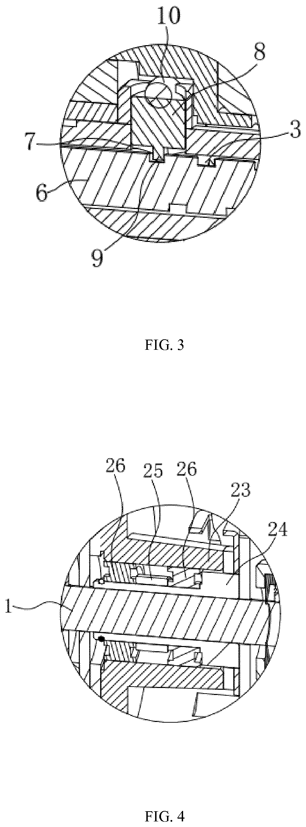

With reference to Fig. 1 to Fig. 7, a reciprocating mechanism of a fishing reel comprises:
a main shaft 1, wherein the rear end of the main shaft is movably inserted into a fishing reel , the front end of the main shaft is connected with a line cup 2 on the fishing reel, and the main shaft 1 is provided with a reciprocating thread 3;
a worm gear disc 4 arranged in the fishing reel and being in transmission connection with a crank 5 on the fishing reel; preferably, the worm gear disc 4 is connected with the crank 5 through a coupling 29;
a worm 6 sleeved on the main shaft 1, engaged with the worm gear disc 4 and provided with a slot 7; and
a sliding pawl 8 having a connecting ratch 9 adapted with the reciprocating thread 3, wherein the connecting ratch 9 penetrates through the slot 7 and is engaged with the reciprocating thread 3.

When the sliding pawl 8 moves back and forth forwards and backwards along the reciprocating thread 3, the sliding pawl 8 touches the main shaft 1 and supports a certain radial force and lateral force, causing the sliding pawl 8 to jump. In the absence of good limit fixation, the position of the sliding pawl is prone to deviation or even occurrence of disengagement, resulting in that the sliding pawl cannot be used normally. In the present embodiment, the reciprocating mechanism of a spinning reel further comprises a seal ring 10; the worm 6 is sleeved with a fastening sheath 11; the fastening sheath 11 is provided with a groove 12; the position of the groove 12 corresponds to the position of the slot 7; and the seal ring 10 is clamped into the groove 12 and is used to press the sliding pawl 8 inserted into the slot 7. To ensure the normal operation of the sliding pawl 8, a limit fixation structure provided by the present embodiment can be used. Specifically, the sliding pawl 8 is pressed into the slot 7 through the seal ring 10 to eliminate the jump generated when the sliding pawl 8 moves back and forth, so that the sliding pawl 8 can always be well engaged with the reciprocating thread 3 and can also play a certain sealing action, thereby preventing external water droplets or impurities from entering the inside and affecting the use of workpieces. At the same time, to keep the position of the seal ring 10 stationary, the worm 6 is provided with the fastening sheath 11. The fastening sheath 11 is firmly sleeved on the worm 6, and the position of the fastening sheath 11 is difficult to move, thereby achieving the limitation to the seal ring 10. Of course, the fastening sheath 11 can also be integrated in one piece with the worm 6. Although the cost may be increased, the use effect is better.

In the present embodiment, the reciprocating mechanism of a spinning reel further comprises a movable limiting block 13 which is fixed into the fishing reel; the rear end of the main shaft 1 has a flat section 14; the movable limiting block 13 is provided with a limiting hole 15 adapted with the flat section 14; and the flat section 14 is inserted into the limiting hole 15 and can move forwards and backwards along the limiting hole 15. Through the arrangement of the movable limiting block 13, the main shaft 1 that moves forwards and backwards can be limited to move forwards and backwards along a fixed trajectory. Moreover, the middle main body part 27 of the main shaft 1 is cylindrical, and the rear end presents the flat section 14, so that the limiting hole 15 forms a limit to the middle main body part 27 of the main shaft 1, which can prevent the main shaft 1 from rotating, thereby better playing an effect of controlling a forward and backward moving distance.

Preferably, the front end of the movable limiting block 13 is provided with a clamping groove 16; a first bushing 17 is arranged in the clamping groove 16; and the first bushing 17 is sleeved on the main shaft 1; the front part of the main shaft 1 is also sleeved with a bearing fixing seat 24; the bearing fixing seat 24 is provided with a second bushing 25 and a rotor bearing 26; and the rotor bearing 26 is abutted against a rotor 23 of the fishing reel. Through the arrangement of the first bushing 17, a protection effect can be performed when the main shaft 1 moves, thereby reducing the friction between the main shaft 1 and the movable limiting block 13, so that the overall operation is smoother and the service life is longer. Since the rotor needs to rotate continuously during use, the friction can be reduced by the arrangement of the rotor bearing 26 and the rotation accuracy of the line cup can be ensured, thereby making the overall operation smoother and the service life longer.

Because the length of the main shaft 1 is long, it is difficult to achieve a good effect only by supporting and fixing at the end through the movable limiting block 13 and the main shaft 1 is unbalanced front and back. Thus, the forward and backward movement may be not smooth. In the present embodiment, the reciprocating mechanism of a spinning reel further comprises a holding block 18; the holding block 18 is positioned at the front side of the movable limiting block 13; the holding block 18 is provided with a through hole 19; the main shaft 1 penetrates through the through hole 19 and then is inserted into the limiting hole 15 of the movable limiting block 13; a first worm bearing 20 and a third bushing 21 are also arranged in the through hole 19; the third bushing 21 is sleeved on the main shaft 1; the first worm bearing 20 is sleeved on the worm 6; and the front part of the worm 6 is also sleeved with a second worm bearing 28. Through the arrangement of the third bushing 21 on the holding block 18, sufficient support is provided to the middle main body part 27 of the main shaft 1 to maintain front and back balance. Through the arrangement of the first worm bearing 20 and the second worm bearing 28, the rotation of the worm is effectively supported, the friction is reduced, and the rotation precision is ensured, thereby making the overall operation smoother and the service life longer.

The present invention also provides a spinning reel, comprising a housing 22, a crank 5 connected to one side of the housing 22 and being in transmission connection with a worm gear disc 4, a rotor 23 positioned at the front end of the housing 22 and fixedly connected with a worm 6, a line cup 2 positioned in the rotor 23 and fixedly connected with a main shaft 1, and a brake mechanism for stopping the outgoing of lines, and further comprising the above reciprocating mechanism of the fishing reel.

When the present invention is used, the crank 5 is shaken, and the crank 5 drives the worm gear disc 4 to rotate. The worm gear disc 4 drives the worm 6 to rotate and realizes the transmission steering, and then the worm 6 drives the main shaft 1 to reciprocate back and forth forwards and backwards through the sliding pawl 8. At the same time, the worm 6 drives the rotor 23 to rotate, and the main shaft 1 drives the line cup 2 to reciprocate back and forth forwards and backwards, thereby throwing a fishing line on the line cup 2 to a distance.

## Claims

1. A reciprocating mechanism of a fishing reel, **characterized by** comprising:
a main shaft, wherein the rear end of the main shaft is movably inserted into a fishing reel, the front end of the main shaft is connected with a line cup on the fishing reel, and the main shaft is provided with a reciprocating thread;
a worm gear disc arranged in the fishing reel and being in transmission connection with a crank on the fishing reel;
a worm sleeved on the main shaft, engaged with the worm gear disc and provided with a slot; and
a sliding pawl having a connecting ratch adapted with the reciprocating thread, wherein the connecting ratch penetrates through the slot and is engaged with the reciprocating thread.

2. The reciprocating mechanism of a fishing reel according to claim 1, **characterized by** further comprising a seal ring; the worm is sleeved with a fastening sheath; the fastening sheath is provided with a groove; the position of the groove corresponds to the position of the slot; and the seal ring is clamped into the groove and is used to press the sliding pawl inserted into the slot.

3. The reciprocating mechanism of a fishing reel according to claim 1, **characterized by** further comprising a movable limiting block which is fixed into the fishing reel; the rear end of the main shaft has a flat section; the movable limiting block is provided with a limiting hole adapted with the flat section; and the flat section is inserted into the limiting hole and can move back and forth along the limiting hole.

4. The reciprocating mechanism of a fishing reel according to claim 3, **characterized in that** the front end of the movable limiting block is provided with a clamping groove; a first bushing is arranged in the clamping groove; and the first bushing is sleeved on the main shaft;
the front part of the main shaft is also sleeved with a bearing fixing seat; the bearing fixing seat is provided with a second bushing and a rotor bearing; and the rotor bearing is abutted against a rotor of the fishing reel.

5. A spinning reel according to claim 3, **characterized by** further comprising a holding block; the holding block is positioned at the front side of the movable limiting block; the holding block is provided with a through hole; the main shaft penetrates through the through hole and then is inserted into the limiting hole of the movable limiting block; a first worm bearing and a third bushing are also arranged in the through hole; the third bushing is sleeved on the main shaft; the first worm bearing is sleeved on the worm; and the front part of the worm is also sleeved with a second worm bearing.

6. A spinning reel, comprising a housing, a crank connected to one side of the housing and being in transmission connection with a worm gear disc, a rotor positioned at the front end of the housing and fixedly connected with a worm, a line cup positioned in the rotor and fixedly connected with a main shaft, and a brake mechanism for stopping the outgoing of lines, **characterized by** further comprising the reciprocating mechanism of the spinning reel of any one of claims 1-5.
